(19) Europäisches Patentamt
European Patent Office
Office européen des brevets

(11) EP 4 203 111 A2

(12) # EUROPEAN PATENT APPLICATION
published in accordance with Art. 153(4) EPC

(43) Date of publication:
**28.06.2023 Bulletin 2023/26**

(21) Application number: **22838024.2**

(22) Date of filing: **07.07.2022**

(51) International Patent Classification (IPC):
***H01M 4/62*** *(2006.01)* ***H01M 4/139*** *(2010.01)*
***H01M 4/13*** *(2010.01)* ***H01M 4/38*** *(2006.01)*
***H01M 10/052*** *(2010.01)* ***H01M 4/02*** *(2006.01)*

(52) Cooperative Patent Classification (CPC):
**H01M 4/62;** Y02E 60/10

(86) International application number:
**PCT/KR2022/009875**

(87) International publication number:
**WO 2023/282672 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.07.2021 KR 20210089726**

(71) Applicant: **LG Energy Solution, Ltd.**
**Seoul 07335 (KR)**

(72) Inventors:
- **LEE, Choonghyeon**
  **Daejeon 34122 (KR)**
- **KIM, Taek Gyoung**
  **Daejeon 34122 (KR)**
- **CHOI, Ran**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CATHODE SLURRY COMPOSITION FOR LITHIUM SECONDARY BATTERY, CATHODE COMPRISING SAME, AND LITHIUM SECONDARY BATTERY**

(57) The present invention relates to a cathode slurry composition for a lithium secondary battery, a cathode comprising same, and a lithium secondary battery and, more particularly, when manufacturing a cathode for a lithium secondary battery including a slurry coating process, a cathode slurry composition having a thixotropy that can secure enough flowability to flexibly respond to a change in slurry coating speed is used to manufacture the cathode, and thus, when manufacturing the cathode for a lithium secondary battery, processability can be increased.

【Figure 1】

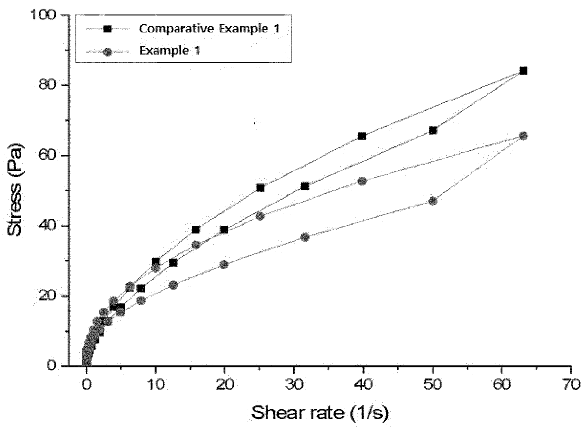


EP 4 203 111 A2

## Description

### Field of Disclosure

The present application is a National Stage Application of International Application No. PCT/KR2022/009875, filed on July 7, 2022, which claims the benefit of priority based on Korean Patent Application No. 2021-0089726 filed on July 8, 2021.

The present disclosure relates to a slurry composition for a positive electrode for a lithium secondary battery, and a positive electrode and a lithium secondary battery comprising the same.

### Background

Recently, with the rapid development of the field of electronic devices and electric vehicles, the demand for secondary batteries is increasing. In particular, with the trend of miniaturization and light weight of portable electronic devices, the demand for secondary batteries having a high energy density capable of responding thereto is increasing.

Among the secondary batteries, the lithium-sulfur secondary battery is a secondary battery which uses a sulfur-based compound having a sulfur-sulfur bond as a positive electrode active material and uses alkali metals such as lithium, or carbon-based materials where intercalation and deintercalation of metal ions such as lithium ions occur, or silicon or tin forming alloy with lithium, as a negative electrode active material. Specifically, the lithium-sulfur secondary battery stores and generates electrical energy by using the oxidation-reduction reaction in which during the discharging which is a reduction reaction, the oxidation number of sulfur is reduced while sulfur-sulfur bonds are broken, and during the charging which is an oxidation reaction, the sulfur-sulfur bond is formed again while the oxidation number of sulfur is increased.

In particular, since sulfur used as a positive electrode active material in lithium-sulfur secondary battery has a theoretical energy density of 1,675 mAh/g, which is about 5 times higher than the positive electrode active material used in the conventional lithium secondary battery, the lithium-sulfur secondary battery is a battery capable of expressing high power and high energy density. In addition, since sulfur has the advantages of low cost, rich reserves, easy supply, and environmental friendliness, sulfur is attracting attention as an energy source for medium and large devices such as electric vehicles as well as portable electronic devices.

Since sulfur has an electrical conductivity of $5\times10^{-30}$ S/cm, which is a nonconductor without electrical conductivity, there is a problem that the movement of electrons generated by the electrochemical reaction is difficult. Accordingly, sulfur is compounded with an electrically conductive material such as carbon that can provide an electrochemical reaction site, and the sulfur-carbon composite produced thereby is used.

In order to use the sulfur-carbon composite as a positive electrode material, a method of manufacturing a positive electrode through a slurry process of preparing a slurry using the sulfur-carbon composite, an electrically conductive material, a binder, and a thickener, and then, applying the slurry to a current collector is generally used.

However, due to low thixotropy of the conventional slurry for the positive electrode for lithium-sulfur secondary batteries, sufficient flowability could not be ensured when applying the slurry to solution coating process. In order to solve this problem, a dispersing agent and/or rheology modifier that is friendly to the sulfur-carbon composite, which is a positive electrode active material, were used in the preparation of the slurry for the positive electrode, but even if these were used, there was no significant change in flowability, and rather the charging/discharging performance was weakened by using the dispersing agent and/or rheology modifier.

Meanwhile, research results for improving the flowability of a slurry for a positive electrode by applying a carboxymethylcellulose-based material as a binder in the preparation of a composition for a positive electrode have been published recently.

For example, in Korea Laid-open Patent Publication No. 2016-0071740, carboxymethyl cellulose (CMC) is contained as a binder in the preparation of the composition for the positive electrode, in order to provide an aqueous composition for a positive electrode to impart stable and flexible electrode plate characteristics. However, when only carboxymethylcellulose is used as a binder, the slurry having low thixotropy does not spread properly when the coating rate is changed in the slurry coating process, so there is a problem that the positive electrode active material layer cannot be uniformly formed.

Lei Qui et al. (Carbohydrate polymers, Vol.112, (2014) pp.532-538) discloses a composition for a positive electrode for a lithium secondary battery comprising lithiated carboxymethyl cellulose (LiCMC) as a binder. However, when only lithiated carboxymethyl cellulose is used as a binder, since thixotropy is also weak in the preparation of the slurry for the positive electrode, there is a problem that when the coating rate changes in the positive electrode active material layer coating process, since it cannot properly correspond to the composition for the positive electrode, the positive electrode active material layer cannot be uniformly formed.

As such, research is ongoing to improve the rheological properties of the lithium secondary battery for improving

the processability in manufacturing the positive electrode for the lithium secondary battery and to improve the charging/discharging performance of the manufactured lithium secondary battery. However, the slurry for the positive electrode developed so far does not show a significant effect on the processability when manufacturing the positive electrode for the lithium secondary battery and the performance improvement of the battery.

Related Arts

Korean Patent Publication No. 2016-0071740; and
Lei Qui et al. (Carbohydrate polymers, Vol.112, (2014) pp.532-538).

## Summary

### Technical Problem

The inventors of the present disclosure have conducted various studies to solve the above problems, and as a result, have confirmed that if the slurry composition for a positive electrode for a lithium secondary battery is mixed with lithiated carboxymethyl cellulose (LiCMC), which is a thickener, and a succinimide-based compound, which is an additive, since the flowability of the slurry composition for the positive electrode is improved, a positive electrode active material layer having good quality can be formed even if the coating rate is changed in the coating process of the slurry composition for the positive electrode during the production of the positive electrode.

Therefore, it is an object of the present disclosure to provide a slurry composition for a positive electrode for a lithium secondary battery, which has excellent flowability and can flexibly respond to variable process conditions when coating the slurry.

It is another object of the present disclosure to provide a positive electrode, which is prepared using the above-mentioned slurry composition for the positive electrode with good flowability, and a method for manufacturing the same.

It is still another object of the present disclosure to provide a lithium secondary battery comprising the positive electrode which is prepared using the above-mentioned slurry composition for the positive electrode with good flowability.

Technical Solution

In order to achieve the above objects, the present disclosure provides a slurry composition for a positive electrode for a lithium secondary battery, the slurry composition comprising a positive electrode active material, an electrically conductive material, a binder, a thickener, an additive, and a solvent, wherein the thickener comprises lithiated carboxymethyl cellulose (LiCMC), and the additive comprises a succinimide-based compound.

The present disclosure also provides a positive electrode for a lithium secondary battery, the positive electrode comprising a positive electrode current collector, and a positive electrode active material layer formed on one surface of the positive electrode current collector, wherein the positive electrode active material layer is formed by the slurry composition for the positive electrode.

The present disclosure also provides a method of manufacturing the positive electrode for the lithium secondary battery, comprising the steps of (S1) coating the slurry composition for the positive electrode on one surface of the positive electrode current collector to form a coating layer; (S2) drying the coating layer formed in step (S1); and (S3) rolling the coating layer to form a positive electrode active material layer.

The present disclosure also provides a lithium secondary battery comprising the positive electrode described above, a negative electrode, a separator and an electrolyte.

### Advantageous Effects

Since the slurry composition for the positive electrode according to the present disclosure has a flowability that can flexibly respond to the changing coating rate during the coating process, a positive electrode having a uniform positive electrode active material layer formed on the positive electrode current collector can be prepared by using the slurry composition for the positive electrode.

In addition, the lithium secondary battery including the positive electrode prepared using the slurry composition for the positive electrode having good flowability exhibits improved charging/discharging performance.

**Brief Description of Drawings**

FIG. 1 is a graph showing the change in shear stress depending on the shear rate of slurry compositions for the positive electrode of Example 1 and Comparative Example 1.

FIG. 2 is a graph showing charging/discharging characteristics of lithium-sulfur secondary batteries of Example 1 and Comparative Example 1.

**Detailed Description**

Hereinafter, the present disclosure will be described in more detail to help the understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his disclosure in the best way possible.

As used herein, the term "thixotropy" refers to a property in which viscosity increases when no shear stress is applied to a material, and decreases when a shear stress is applied to the material.

As used herein, the term "solid content" refers to the positive electrode active material, the electrically conductive material, the binder, the thickener, and the additive collectively excluding the solvent in the slurry composition for the positive electrode for the lithium secondary battery.

**Slurry composition for positive electrode for lithium secondary battery**

The present disclosure relates to a slurry composition for a positive electrode having flowability enough to flexibly respond to a coating rate changing in a coating process for forming a positive electrode active material layer when manufacturing a positive electrode for a lithium secondary battery. At this time, the term "response" means that when the coating rate is increased, since the shear stress applied to the slurry composition for the positive electrode between the current collector on which the coating material is coated and the coating bar is increased, the viscosity of the slurry composition for the positive electrode is reduced, so that it is uniformly coated according to the fast coating rate; and when the coating rate is reduced, since the shear stress applied to the slurry composition for the positive electrode between the current collector and the coating bar is reduced, the viscosity of the slurry composition for the positive electrode is increased, so that it is uniformly coated according to the slow coating rate.

The slurry composition for the positive electrode for the lithium secondary battery according to the present disclosure comprises a positive electrode active material, an electrically conductive material, a binder, a thickener, an additive, and a solvent, wherein the thickener comprises lithiated carboxymethyl cellulose (LiCMC), and the additive comprises a succinimide-based compound.

Since the slurry composition for the positive electrode for the lithium secondary battery contains a succinimide-based compound as an additive, it exhibits improved thixotropy and improved storage properties. In the case of the slurry having the increased thixotropy, the ability to maintain viscosity even during storage without shear stress is increased, so that there is little change in the composition of the upper and lower portions in the slurry over time, thereby improving storage properties. If there is a change in the composition of the upper and lower parts of the slurry, the internal composition of the slurry is different during coating of the slurry, and thus a coating layer having a non-uniform composition may be formed.

Hereinafter, the present disclosure will be described in more detail focusing on each component of the slurry composition for the positive electrode for the lithium secondary battery.

In the present disclosure, the positive electrode active material may comprise one or more selected from the group consisting of elemental sulfur ($S_8$), $Li_2S_n$($n \geq 1$, n is an integer), organic sulfur compound and carbon-sulfur polymer [$(C_2S_x)_n$, $2.5 \leq x \leq 50$, $n \geq 2$, x and n are integers]. Preferably, the positive electrode active material may comprise elemental sulfur. For example, the positive electrode active material may be a sulfur/carbon composite, and the sulfur/carbon composite may be a S/CNT composite obtained using sulfur (S) and carbon nanotube (CNT).

In addition, the positive electrode active material may be contained in an amount of 60% by weight to 97% by weight based on the total weight of the solid content of the slurry composition for the positive electrode. Specifically, the content of the positive electrode active material may be 60% by weight or more, 70% by weight or more, or 80% by weight or more, and 91% by weight or less, 93% by weight or less, or 97% by weight or less. If the content of the positive electrode active material is less than 60% by weight, the battery capacity of the entire cell may be reduced. If the content of the positive electrode active material exceeds 97% by weight, the content of one or more of the electrically conductive

materials, the binder, the thickener, and the additive excluding the positive electrode active material is relatively lowered, so that flowability, conductivity, or physical properties of the slurry composition for the positive electrode may be reduced.

In addition, the electrically conductive material is for improving electrical conductivity, and is not particularly limited as long as it is an electrically conductive material that does not cause chemical change in a lithium secondary battery.

The electrically conductive material may comprise one or more selected from the group consisting of carbon black, graphite, carbon fiber, carbon nanotube, metal powders, electrically conductive metal oxides, and organic electrically-conductive materials. The carbon black may comprise one or more selected from the group consisting of ketjen black, super P, denka black, acetylene black, and furnace black.

The electrically conductive material may be contained in an amount of 0.01 to 30% by weight based on the total weight of the solid content of the slurry composition for the positive electrode. Specifically, the content of the electrically conductive material may be 0.01% by weight or more, 2% by weight or more, or 4% by weight or more, and 10% by weight or less, 20% by weight or less, or 30% by weight or less. If the content of the electrically conductive material is less than 0.01% by weight, the conductivity of the positive electrode may be reduced. If the content of the electrically conductive material exceeds 30% by weight, the flexibility of the positive electrode may be reduced.

In addition, the binder maintains the positive electrode active material in the positive electrode current collector, and organically connects between the positive electrode active materials to increase the bonding force between them, and any binder known in the art may be used.

The binder may be fluororesin-based binders comprising polyvinylidene fluoride (PVdF) and/or polytetrafluoroethylene (PTFE); rubber-based binders comprising one or more of styrene butadiene rubber (SBR), acrylonitrile-butadiene rubber, and styrene-isoprene rubber; cellulose-based binders comprising one or more of carboxymethylcellulose (CMC), starch, hydroxypropylcellulose, and regenerated cellulose; polyalcohol-based binders; polyolefin-based binders comprising one or more of polyethylene and polypropylene; polyimide-based binders; polyester-based binders; acrylic binders comprising an acrylic monomers; and silane-based binders, or mixtures or copolymers of two or more thereof. According to one embodiment of the present disclosure, the binder may preferably be a combination of a rubber-based binder. In addition, in consideration of compatibility with the carboxymethylcellulose-based thickener, the binder may comprise SBR and/or an acrylic binder.

In addition, the binder may be an emulsion type binder. Typically, the form of the binder for the positive electrode may be used in the form of a linear polymer as long as it can bind the components in the positive electrode, and is not particularly limited. However, if the emulsion-type binder is used, the components for the positive electrode can be most effectively combined in the form of dots and dots, and the adhesive strength is also good. In addition, if the emulsion-type binder is used, there is an effect of increasing the solid content in the slurry compared to the binder in the form of a linear polymer.

In addition, the binder may be contained in an amount of 0.01 to 30% by weight based on the total weight of the solid content of the slurry composition for the positive electrode. Specifically, the content of the binder may be 0.01% by weight or more, 1% by weight or more, or 2% by weight or more, and 10% by weight or less, 20% by weight or less, or 30% by weight or less. If the content of the binder is less than 0.01% by weight, the physical properties such as adhesive strength of the positive electrode may be degraded and thus the positive electrode active material and conductive material may be eliminated. If the content of the binder exceeds 30% by weight, the ratio of the positive electrode active material and the electrically conductive material is relatively reduced and thus the capacity of the battery can be reduced.

In addition, the thickener can secure the stability of the slurry composition for the positive electrode by imparting appropriate viscosity to the slurry composition for the positive electrode and can improve the surface defect by alleviating the re-aggregation phenomenon between solid contents when the slurry composition for the positive electrode is coated on the positive electrode current collector.

The thickener may comprise lithiated carboxymethyl cellulose (LiCMC). The LiCMC may be represented by the following Formula 1:

<Formula 1>

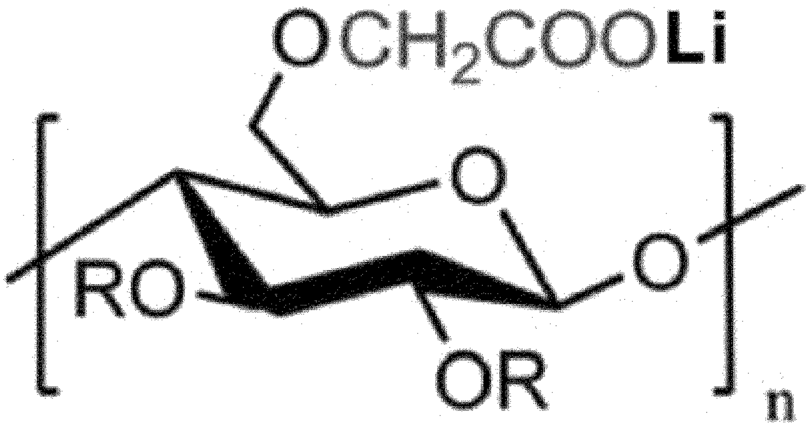

wherein R is H or $CH_2COOH$, and n is 25 to 2000.

The LiCMC is obtained by substituting Li for metal ions of the conventional CMC. Metal ions comprised in the conventional CMC may act as impurities inside the cell, thereby degrading the cell's performance, whereas LiCMC excludes impurities inside the cell and contains lithium ions, so that degradation of cell's performance due to impurities may be minimized.

In addition, since the LiCMC is used together with a succinimide-based compound, it is possible to change the internal interaction (hydrogen bonding) of the slurry and thus improve the thixotropy corresponding to the shear stress. Specifically, the thixotropy of the slurry may increase due to the interaction by hydrogen bonding between the functional group of LiCMC ($-OCH_2COO-$ or -OR) and the internal functional group of the succinimide-based compound (N-hydroxyl & carbonyl group), thereby improving the storability of the slurry.

In addition, the thickener may be contained in an amount of 0.5% by weight to 5% by weight based on the total weight of the solid content of the slurry composition for the positive electrode. Specifically, the content of the thickener may be 0.5% by weight or more, 0.8% by weight or more, or 1% by weight or more, and 2% by weight or less, 3% by weight or less, or 5% by weight or less. If the content of the thickener is less than 0.5 % by weight, since the viscosity of the slurry composition for the positive electrode is low and flows down like water, it is impossible to coat the slurry composition for the positive electrode on the positive electrode current collector. If the content of the thickener exceeds 5% by weight, it may be difficult to form a uniform coating layer because it has high viscosity and is stiff.

The viscosity of the slurry composition for the positive electrode is not particularly limited, and the viscosity may vary depending on the content of the thickener, but considering the phase stability of the slurry composition for the positive electrode and the ease of the coating process, the viscosity may be at least 1000 cP or at least 4500 cP at 25°C.

In addition, the additive may allow to have thixotropy to cope with variable coating rates in the coating process of coating the slurry composition for the positive electrode on the positive electrode current collector during the production of the positive electrode.

The additive comprises a succinimide-based compound, and the succinimide-based compound may comprise one or more selected from the group consisting of N-hydroxylsuccinimide (NHS), N-(2-hydroxyethyl)succinimide, N-succinimidyl acetate, N-succinimidyl methacrylate, N-succinimidyl acrylate, succinimide and ethosuximide.

If the succinimide-based compound is included as an additive, the solid content in the slurry is increased, so that it may be easy to control thixotropy. For example, when preparing the slurry, if the succinimide-based compound is used as an additive in addition to the existing components to prepare the slurry, the effect of increasing the solid content is good, so it may be easy to control the thixotropy of the slurry.

In addition, the additive may be contained in an amount of 0.01% by weight to 5% by weight based on the total weight of the solid content of the slurry composition for the positive electrode. Specifically, the content of the additive may be 0.01% by weight or more, 0.1% by weight or more, or 0.3% by weight or more, and 1.5% by weight or less, 3% by weight or less, or 5% by weight or less. If the content of the additive is less than 0.01% by weight, the slurry composition for the positive electrode has poor thixotropy, so it may be difficult to form a coating layer having a uniform thickness when the coating rate is changed during the coating process. If the content of the additive exceeds 5% by weight, the content of the LiCMC thickener is relatively reduced, and the slurry composition for the positive electrode has poor stability, which may cause cracks after the formation of the coating layer.

In addition, the solvent may be used without particular limitation as long as it can be mixed with the positive electrode active material, the electrically conductive material, the binder, the thickener and the additive as described above to form the slurry composition for the positive electrode.

The solvent may comprise an organic solvent and/or an aqueous solvent. The organic solvent may comprise one or more selected from the group consisting of N-methyl-2-pyrrolidone (NMP), methoxy propyl acetate, butyl acetate, glycol acid, butyl ester, butyl glycol, methyl alkyl polysiloxane, alkylbenzene, propylene glycol, xylene, monophenyl glycol, aralkyl modified methyl alkyl polysiloxane, polyether modified dimethyl polysiloxane copolymer, polyether-modified dimethyl polysiloxane copolymer, polyacrylate, alkylbenzene, diisobutylketone, organically modified polysiloxane, butanol, isobutanol, modified polyacrylate, modified polyurethane, and polysiloxane modified polymer. The aqueous solvent may comprise water.

The solvent may be 55 to 70% by weight based on the total weight of the slurry composition for the positive electrode. Specifically, the content of the solvent may be 55% by weight or more or 57% by weight or more, and 65% by weight or less, 67% by weight or less, or 70% by weight or less. If the content of the solvent is less than 55% by weight, since the concentration of the slurry composition for the positive electrode becomes excessively high and stiff, it may be difficult to uniformly coat the slurry composition for the positive electrode on the positive electrode current collector. If the content of the solvent exceeds 70% by weight, since the concentration of the slurry composition for the positive electrode is excessively low and flows down, it may be difficult to control the slurry composition for the positive electrode in the coating process, and it may take a long time to dry after forming the coating layer.

In the present disclosure, the slurry composition for the positive electrode may have a thixotropic index (T) of 0.1 to 0.4, which is represented by Equation 1 below:

<Equation 1>

Thixotropic index(T) = (Viscosity of slurry composition for positive electrode at rotation speed of 10 rpm) / (Viscosity of slurry composition for positive electrode at rotation speed of 1 rpm),

wherein the viscosity was measured at 25°C.

The slurry composition for the positive electrode has thixotropy, which is a property of increasing viscosity when shear stress is not applied and decreasing viscosity when shear stress is applied.

By using the principle that shear stress is applied by a shear rate proportional to the rotation speed when the slurry composition for the positive electrode is rotated, thixotropy was defined using the viscosity of the slurry composition for the positive electrode at a rotation speed of 10 rpm versus the viscosity of the slurry composition for the positive electrode at a rotation speed of 1 rpm, as shown in Equation 1 above. When the rotation speed is 1 rpm, the shear rate is 0.29/s, and when the rotation speed is 10 rpm, the shear rate is 2.9/s.

If the thixotropic index (T) is less than 0.1, since the viscosity at high rotation speed compared to low rotation speed is very low, when the coating rate is changed in the process of coating the slurry composition for the positive electrode on the positive electrode current collector, the effective coating rate is limited. If the thixotropic index (T) exceeds 0.4, even if the coating rate is changed, the viscosity change is not large, so it may be difficult to respond to the slurry. Specifically, the thixotropic index (T) may be 0.1 or more, 1.5 or more, or 2.0 or more, and 3.0 or less, 3.5 or less, or 4.0 or less.

**Method for preparing slurry composition for positive electrode for lithium secondary battery**

The present disclosure also relates to a method for preparing a slurry composition for a positive electrode for a lithium secondary battery. The types and weights of materials used in the preparation of the slurry composition for the positive electrode are as described above.

The slurry composition for the positive electrode may be prepared by adding the positive electrode active material, the electrically conductive material, the binder, the thickener, and the additive as described above to the solvent and mixing them.

The mixing may be carried out by milling, but is not particularly limited as long as it is a mixing method used for forming a slurry in the art. For example, the milling may be bead milling, roll milling, ball milling, attrition milling, planetary milling, jet milling, or screw mixing milling. Preferably, the bead milling can be applied in consideration of the uniform mixing and dispersibility of the components comprised in the slurry composition for the positive electrode.

**Positive electrode for lithium secondary battery**

The present disclosure also provides a positive electrode for a lithium secondary battery, the positive electrode comprising a positive electrode current collector, and a positive electrode active material layer formed on one surface of the positive electrode current collector, wherein the positive electrode active material layer comprises a positive electrode active material, a binder, an electrically conductive material, a thickener and an additive.
In the present disclosure, the positive electrode current collector is not particularly limited as long as it has conductivity without causing a chemical change in the battery and can be used electrochemically and stably at the charging voltage of the positive electrode. For example, the positive electrode current collector may be one or more selected from the group consisting of copper, aluminum, stainless steel, titanium, silver, palladium, nickel, alloys thereof, and combinations thereof. The stainless steel may be surface-treated with carbon, nickel, titanium, or silver.
In addition, the shape of the positive electrode current collector is not particularly limited, and may be in the form of film, sheet, foil, net, porous body, foam, or nonwoven fabric. If necessary, fine irregularities may be formed on the surface of the positive electrode current collector, and the irregularities may help to improve the adhesive force with the positive electrode active material layer. The method of forming the irregularities on the surface of the positive electrode current collector is not particularly limited, and, for example, a known method such as a mechanical polishing method, an electrolytic polishing method, or a chemical polishing method may be applied.
In addition, the thickness of the positive electrode current collector is not particularly limited, and may be set in an appropriate range in consideration of the mechanical strength or productivity of the positive electrode, or the capacity of the battery. For example, the thickness of the positive electrode current collector may be typically 3$\mu$m to 500$\mu$m.
In the present disclosure, the positive electrode active material layer is formed by the slurry composition for the positive electrode as described above, and may comprise a positive electrode active material, a binder, an electrically conductive material, a thickener, and an additive. The types and contents of the positive electrode active material, the binder, the electrically conductive material, the thickener, and the additive are as described above.
The thickness of the positive electrode active material layer is not particularly limited, and may be set in an appropriate range in consideration of the mechanical strength of the positive electrode, the loading amount, or the capacity of the battery. For example, the thickness of the positive electrode active material layer may be typically 30$\mu$m to 300$\mu$m.

**Method of manufacturing positive electrode for lithium secondary battery**

The present disclosure also relates to a method for manufacturing a positive electrode for a lithium secondary battery, which comprises the steps of (S1) coating the slurry composition for the positive electrode on one surface of the positive electrode current collector to form a coating layer; (S2) drying the coating layer formed in step (S1); and (S3) rolling the coating layer to form a positive electrode active material layer.
In step (S1), a coating layer may be formed by coating the slurry composition for the positive electrode on one surface of the positive electrode current collector. The positive electrode current collector and the slurry composition for the positive electrode are the same as described above.
A method of the coating is not particularly limited as long as it is capable of coating the slurry. For example, the coating may be performed by one or more selected from the group consisting of a roll-to-roll coating method, a spin coating method, a nozzle printing method, an inkjet printing method, a slot coating method, and a dip coating method, and preferably a roll-to-roll coating method.
In the coating process using the coating method as described above, the coating rate may be variable. Depending on the coating conditions, the coating rate can be varied to establish optimized drying conditions. The coating rate is variable because the solvent drying speed is different depending on the properties of the slurry composition for the positive electrode in the process of applying the slurry composition for the positive electrode to the current collector and drying it.
In step (S2), the coating layer formed in step (S1) may be dried.
Through the drying, the solvent contained in the slurry composition for the positive electrode may evaporate to form a layer-type coating layer.
The drying temperature may be 30 °C or more, 40 °C or more, or 45 °C or more, and 60 °C or less, 70 °C or less, or 80 °C or less so that a good-quality positive electrode active material layer can be formed.
In step (S3), the coating layer formed in step (S2) may be rolled to form a positive electrode active material layer.
As the rolling, a conventional rolling process used in the art may be introduced, and the rolling may be performed using a roll press. For example, the rolling using the roll press may be performed by applying pressure to the positive electrode current collector having the coating layer formed thereon with the roll, in a state where two rolls are placed on the top and bottom of the positive electrode current collector on which the coating layer is formed, and simultaneously

moving the positive electrode current collector having the coating layer formed thereon in a horizontal direction.

**Lithium secondary battery**

The present disclosure also relates to a lithium secondary battery comprising a positive electrode, a negative electrode, a separator and an electrolyte solution.

In the lithium secondary battery according to the present disclosure, the structure, constituent materials, and manufacturing method of the positive electrode are as described above.

In the lithium secondary battery according to the present disclosure, the negative electrode may comprise a negative electrode current collector and a negative electrode active material layer formed on the negative electrode current collector. The negative electrode active material layer (e.g., lithium foil) may be used alone.

The negative electrode current collector is not particularly limited as long as it has electrical conductivity without causing a chemical change in the relevant battery. For example, copper, stainless steel, aluminum, nickel, titanium, sintered carbon, copper or stainless steel surface-treated with carbon, nickel, titanium, silver or the like; aluminum-cadmium alloy or the like may be used as the negative electrode current collector. Also, as with the positive electrode current collector, the shape of the negative electrode current collector can be various forms such as a film having fine irregularities on its surface, sheet, foil, net, porous body, foam, nonwoven fabric and the like.

In addition, the negative electrode active material may comprises, but is not limited to, one or more carbon-based materials selected from the group consisting of crystalline artificial graphite, crystalline natural graphite, amorphous hard carbon, low crystalline soft carbon, carbon black, acetylene black, Ketjen black, Super-P, graphene, and fibrous carbon, Si-based material, metal composite oxides such as LixFe$_2$O$_3$($0\le x\le 1$), $Li_xWO_2$($0\le x\le 1$), $Sn_xMe_{1-x}Me'_yO_z$ (Me: Mn, Fe, Pb, Ge; Me': Al, B, P, Si, elements of groups 1, 2, and 3 of the periodic table, halogen; $0<x\le 1$; $1\le y\le 3$; $1\le z\le 8$); lithium metal; lithium alloy; silicon-based alloy; tin-based alloy; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$; an electrical conductivity polymer such as polyacetylene; Li-Co-Ni based material; titanium oxide; lithium titanium oxide and the like.

In addition, the negative electrode active material may be metal composite oxides such as $Sn_xMe_{2-x}Me'_yO_z$ (Me: Mn, Fe, Pb, Ge; Me': Al, B, P, Si, elements of groups 1, 2, and 3 of the periodic table, halogen; $0<x<1$; $1\le y\le 3$; $1\le z\le 8$); oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_3$, and carbon-based negative electrode active materials such as crystalline carbon, amorphous carbon, or carbon composite may be used alone or in combination of two or more thereof.

In the lithium secondary battery according to the present disclosure, as the electrolyte solution, any of those commonly used for manufacturing a lithium secondary battery may be used.

Lithium salts that may be contained as electrolytes in the electrolyte solution may be used without limitation as long as they are commonly used in the electrolyte solution for a lithium secondary battery. For example, the anion of the lithium salt may be any one selected from the group consisting of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN- and $(CF_3CF_2SO_2)_2N$-. The lithium salt may be LiTFSI(Lithium bis(trifluoromethanesulfonyl)imide, $LiC_2F_6NO_4S_2$) and/or $LiNO_3$.

In the electrolyte solution used in the present disclosure, the organic solvent comprised in the electrolyte solution may be used without limitation as long as it is commonly used in the electrolyte solution for a lithium secondary battery. According to an embodiment of the present disclosure, the organic solvent may be a carbonate-based, ester-based, ether-based, ketone-based, alcohol-based or aprotic solvent. Among them, an ether-based solvent may be typically used.

The carbonate-based solvent may specifically comprise dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like.

The ester-based solvent may specifically comprise methyl acetate, ethyl acetate, n-propyl acetate, 1,1-dimethylethyl acetate, methylpropionate, ethylpropionate, γ-butyrolactone, decanolide, valerolactone, mevalonolactone, carprolactone or the like.

The ether-based solvent may specifically comprise dimethyl ether, diethyl ether, dipropyl ether, methylethyl ether, methylpropyl ether, ethylpropyl ether, dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, polyethylene glycol methylethyl ether, diglyme, triglyme, tetraglyme, tetrahydrofuran, 2-methyltetrahydrofuran, polyethylene glycol dimethyl ether, or the like.

The ketone-based solvent may specifically comprise cyclohexanone or the like. The alcohol-based solvent may specifically comprise ethyl alcohol, isopropyl alcohol, and the like.

Specifically, the aprotic solvent may comprise nitriles such as acetonitrile, amides such as dimethylformamide, dioxolanes such as 1,3-dioxolane (DOL), or sulfolane.

The non-aqueous organic solvent may be used alone or as a mixture of one or more solvents, and when one or more solvents are mixed and used, the mixing ratio may be appropriately adjusted according to the desired performance of the battery.

In the lithium secondary battery according to the present disclosure, the separator may be a conventional porous polymer film used as a separator in the art. For example, the separator may be a single porous polymer film made of a polyolefin-based polymer such as polyethylene, polypropylene, ethylene/butene copolymer, ethylene/hexene copolymer, and ethylene/methacrylate copolymer, or a laminate thereof, or may be a conventional porous nonwoven fabric, for example, a nonwoven fabric made of high melting point glass fiber, polyethylene terephthalate fiber, etc., but is not limited thereto.

In the lithium secondary battery according to the present disclosure, the shape of the battery is not particularly limited and may be, for example, a jelly-roll type, a stack type, a stack-folding type (including a stack-Z-folding type), or a lamination-stack type, preferably a stack-folding type.

In addition, the lithium secondary battery is manufactured by sequentially stacking the negative electrode, the separator, and the positive electrode, injecting an electrolyte solution to prepare an electrode assembly, and then putting it in a battery case, and then sealing it with a cap plate and a gasket and assembling it.

In this case, the lithium secondary battery can be classified into various types of batteries such as lithium-sulfur secondary battery, lithium-air battery, lithium-oxide battery, and lithium all-solid-state battery depending on the materials of positive electrode/negative electrode used, can be classified into cylindrical, rectangular, coin-shaped, pouch type depending on the type, and can be divided into bulk type and thin film type depending on the size. The structure and preparation method of these batteries are well known in the art, and thus detailed description thereof is omitted.

In the present disclosure, the lithium secondary battery may be a lithium-sulfur secondary battery using a positive electrode material comprising a sulfur-carbon composite as a positive electrode. The lithium-sulfur secondary battery may use lithium metal as a negative electrode active material. During the discharging of the lithium-sulfur secondary battery, an oxidation reaction of lithium occurs at the negative electrode and a reduction reaction of sulfur occurs at the positive electrode. At this time, the reduced sulfur is combined with lithium ions moved from the negative electrode, and thus is converted into lithium polysulfide, and is finally accompanied by a reaction to form lithium sulfide.

In addition, the present disclosure relates to a battery module comprising the lithium secondary battery, and the battery module can be used as a power source for devices requiring high capacity and high rate characteristics, etc. Specific examples of the device may comprise, but are not limited to, a power tool that is powered by a battery powered motor; electric cars including an electric vehicle (EV), a hybrid electric vehicle (HEV), a plug-in hybrid electric vehicle (PHEV), and the like; an electric motorcycle including an electric bike (E-bike) and an electric scooter (E-scooter); an electric golf cart; and a power storage system.

## Mode for Invention

Hereinafter, preferred examples of the present disclosure will be described in order to facilitate understanding of the present disclosure. It will be apparent to those skilled in the art, however, that the following examples are illustrative of the present disclosure and that various changes and modifications can be made within the scope and spirit of the present disclosure, and also it is natural that such variations and modifications are within the scope of the appended claims.

### Example 1

(1) Preparation of slurry composition for positive electrode

A positive electrode active material, an electrically conductive material, a binder, a thickener, and an additive were mixed in a weight ratio of 92:5:2:0.7:0.3 to obtain a mixture. The positive electrode active material was a S/CNT composite obtained by mixing sulfur (S, manufactured by Sigma-Aldrich) with Carbon Nanotube (CNT) using a ball mill and then heat-treating at 155°C, the electrically conductive material was Denka black, the binder was styrene-butadiene rubber (SBR), the thickener was LiCMC (LiCMC1000, GLchem), and the additive was hydroxysuccinimide (NHS).

The above-described mixture and water were mixed to prepare a slurry composition for a positive electrode.

(2) Manufacture of positive electrode

The slurry composition for the positive electrode was coated on one surface of the positive electrode current collector of aluminum foil (Al foil) having a thickness of 12 $\mu$m, and then dried at 50°C for 2 hours and rolled to form a positive electrode with a positive electrode active material layer.

(3) Manufacture of lithium-sulfur secondary battery

A separator of porous polyethylene having a thickness of 20 $\mu$m and a porosity of 45% is put between the positive electrode and the lithium negative electrode, and these are placed inside the case, and then, an electrolyte was injected into the case to manufacture a lithium-sulfur secondary battery in the form of a CR-2032 coin cell.

The electrolyte obtained by adding 0.38 M LiTFSI and 0.31 M $LiNO_3$ to a mixed solvent of 1,3-dioxolane (DOL) and 1,2-dimethoxyethane (DME) (1:1, v/v) was used.

**Comparative Example 1**

A slurry composition for a positive electrode, a positive electrode, and a lithium-sulfur secondary battery were prepared in the same manner as in Example 1, except that the additive is not used, and the positive electrode active material, the electrically conductive material, the binder and the thickener are mixed in a weight ratio of 92:5:2:1.

**Experimental Example 1: Measurement of viscosity, thixotropic index and rheological property of slurry composition for positive electrode**

For the slurry composition for the positive electrode prepared in the Example and the Comparative Example, the viscosity was measured, the thixotropic index was calculated from the measured viscosity, and the rheological property was measured. The results are shown in Table 1 and FIG. 1 below.

The method for measuring the viscosity, the method for calculating the thixotropic index, and the method for measuring the rheological property are as described below.

(1) Measurement of viscosity

4 ml of the slurry composition for the positive electrode was put into a 25°C container, and an SCP-16 spindle (Brookfield) was installed in the container. Thereafter, the SCP-16 spindle was rotated at a speed of 1 rpm to 10 rpm, and the viscosity (cP) measured at each rotation speed was recorded. Viscometer (DV2T, Brookfield) was used as a viscometer for measuring the viscosity.

(2) Calculation of thixotropic index

Using Equation 1 below, the thixotropic index of the slurry composition for the positive electrode was calculated:

<Equation 1>

Thixotropic index (T) = (Viscosity of slurry composition for positive electrode at rotation speed of 10 rpm) / (Viscosity of slurry composition for positive electrode at rotation speed of 1 rpm),

wherein the above viscosity is measured at 25°C.

(3) Measurement of rheological property

1 g of the slurry composition for the positive electrode was put into a rheometer (DHR-1, TA instruments), and then, the shear stress (Pa) corresponding to the shear rate varying in the range of 0.1/s to 50/s was measured.

Table 1:

| | Thickener | | Additive | | Viscosity (cP) depending on rotation speed (shear rate) | | physical property of Slurry | Thixot ropic index (T) |
|---|---|---|---|---|---|---|---|---|
| | Type | Content (% by weight) | Type | Content (% by weight) | 1 rpm (0.29/s) | 10 rpm (2.9/s) | Solid content (% by weight) | |
| Example 1 | LiCMC | 0.7 | NHS | 0.3 | 7800 | 1944 | 40 | 0.25 |
| Comparative Example 1 | LiCMC | 1 | - | - | 5040 | 2004 | 36 | 0.398 |

As shown in Table 1, it can be seen that Example 1 is the slurry composition for the positive electrode containing an appropriate amount of NHS as an additive, has a high viscosity, and has a low thixotropic index value compared to Comparative Example 1, and thus has high thixotropic property.

In addition, it can be seen that Comparative Example 1 is the slurry composition for the positive electrode that does not contain an additive, and Comparative Example 1 has a viscosity required to form the slurry, but has low ability to respond to changes in shear stress.

FIG. 1 is a graph showing the change in shear stress depending on the shear rate of the slurry composition for the positive electrode of Example 1 and Comparative Example 1.

Referring to FIG. 1, a difference in the size of the inner area of the hysteresis loop can be confirmed, and it can be seen that the slurry of Example 1 has excellent thixotropic property.

**Experimental Example 2: Evaluation of charging/discharging characteristics**

For lithium-sulfur secondary batteries in the form of CR-2032 coin cells prepared in the Example and the Comparative Example, 0.1C charging/0.1C discharging three times and 0.3C charging/0.5C discharging were performed within a voltage range of 1.8 V to 2.5 V to evaluate charging/discharging characteristics.

FIG. 2 is a graph showing charging/discharging characteristics of the lithium-sulfur secondary batteries of Example 1 and Comparative Example 1.

Referring to FIG. 2, the lithium-sulfur battery of Example 1 showed an initial discharging capacity of 1105 mAh/g, which was higher than the discharging capacity of Comparative Example 1 of 1080 mAh/g, and exhibited lifetime performance of maintaining a discharging capacity of 800 mAh/g or more for 100 cycles or more. This is the same or superior performance to the maintenance of the discharging capacity of the lithium-sulfur battery of Comparative Example 1 without the additive.

In the above, although the present disclosure has been described by way of limited embodiments and drawings, the present disclosure is not limited thereto, and it is apparent to those skilled in the art that various modifications and variations can be made within the equivalent scope of the technical spirit of the present disclosure and the claims to be described below.

**Claims**

1. A slurry composition for a positive electrode for a lithium secondary battery, the slurry composition comprising a positive electrode active material, an electrically conductive material, a binder, a thickener, an additive, and a solvent,

   wherein the thickener comprises a lithiated carboxymethyl cellulose (LiCMC), and
   wherein the additive comprises a succinimide-based compound.

2. The slurry composition according to claim 1, wherein the succinimide-based compound comprises one or more selected from the group consisting of N-hydroxylsuccinimide (NHS), N-(2-hydroxyethyl)succinimide, N-succinimidyl acetate, N-succinimidyl methacrylate, N-succinimidyl acrylate, succinimide and ethosuximide.

3. The slurry composition according to claim 1, wherein the thickener is contained in an amount of 0.5% by weight to 5% by weight based on the total weight of the solid content of the slurry composition.

4. The slurry composition according to claim 1, wherein the additive is contained in an amount of 0.01 % by weight to 5 % by weight based on the total weight of the solid content of the slurry composition.

5. The slurry composition according to claim 1, wherein the solvent comprises one or more selected from an organic solvent and an aqueous solvent,

wherein the organic solvent comprises one or more selected from the group consisting of N-methyl-2-pyrrolidone (NMP), methoxy propyl acetate, butyl acetate, glycol acid, butyl ester, butyl glycol, methyl alkyl polysiloxane, alkylbenzene, propylene glycol, xylene, monophenyl glycol, aralkyl modified methyl alkyl polysiloxane, polyether modified dimethyl polysiloxane copolymer, polyether-modified dimethyl polysiloxane copolymer, polyacrylate, alkylbenzene, diisobutylketone, organically modified polysiloxane, butanol, isobutanol, modified polyacrylate, modified polyurethane, and polysiloxane modified polymer, and
wherein the aqueous solvent comprises water.

6. The slurry composition according to claim 1, wherein the positive electrode active material comprises one or more selected from the group consisting of elemental sulfur ($S_8$), $Li_2S_n$ ($n \geq 1$, n is an integer), organic sulfur compound and carbon-sulfur polymer [$(C_2S_x)_n$, $2.5 \leq x \leq 50$, $n \geq 2$, x and n are integers].

7. The slurry composition according to claim 1, wherein the slurry composition for the positive electrode has a thixotropic index (T) of 0.1 to 0.4.

8. A positive electrode for a lithium secondary battery, the positive electrode comprising a positive electrode current collector; and a positive electrode active material layer formed on one surface of the positive electrode current collector, wherein the positive electrode active material layer is formed of the slurry composition of claim 1.

9. A method for manufacturing a positive electrode for a lithium secondary battery, the method comprising:

(51) coating the slurry composition of claim 1 to form a coating layer on one surface of a positive electrode current collector;
(S2) drying the coating layer formed in step (S1); and
(S3) rolling the coating layer to form a positive electrode active material layer.

10. The method according to claim 9, wherein the coating is performed by one or more selected from the group consisting of a bar coating method, a roll-to-roll coating method, a spin coating method, a nozzle printing method, an inkjet printing method, a slot coating method, and a dip coating method.

11. A lithium secondary battery comprising the positive electrode according to claim 8, a negative electrode, a separator and an electrolyte solution.

12. The lithium secondary battery according to claim 11, wherein the lithium secondary battery is a lithium-sulfur secondary battery.

【Figure 1】

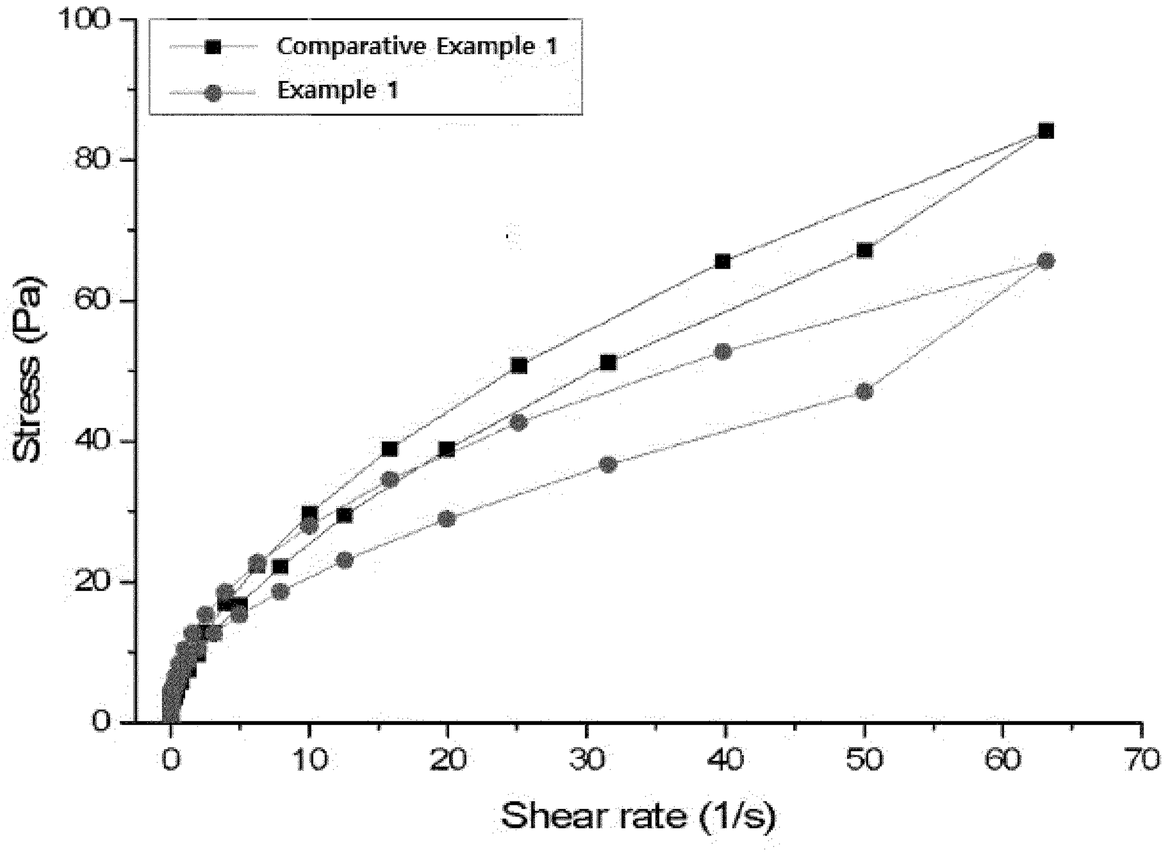
Comparative Example 1
Example 1
Stress (Pa)
Shear rate (1/s)
0
20
40
60
80
100
0
10
20
30
40
50
60
70

【Figure 2】

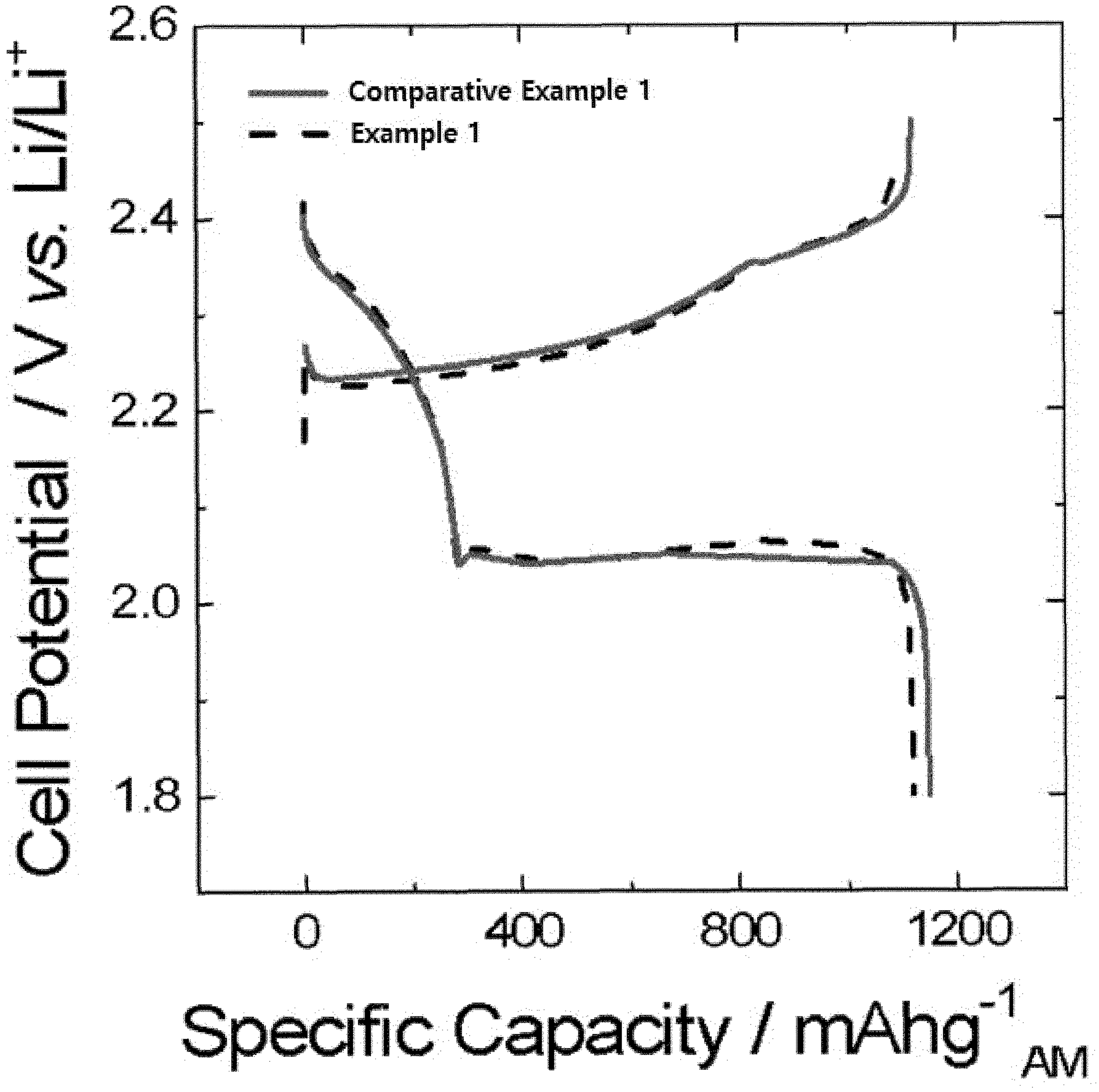
Comparative Example 1
Example 1
Cell Potential / V vs. Li/Li+
2.6
2.4
2.2
2.0
1.8
0
400
800
1200
Specific Capacity / mAhg-1AM

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 2022009875 W
- KR 20210089726
- KR 20160071740

### Non-patent literature cited in the description

- **LEI QUI et al.** *Carbohydrate polymers,* 2014, vol. 112, 532-538